# EUROPEAN PATENT APPLICATION

(11) **EP 3 480 110 A1**
(43) Date of publication of application: **08.05.2019**
(21) Application number: 17199892.5
(22) Date of filing: 03.11.2017
(51) Int. Cl.: B64C 1/18, B64C 1/06, B64F 5/10

(54) **FASTENING ARRANGEMENT FOR ATTACHING A VEHICLE FLOOR**

(71) Applicant: Airbus Operations GmbH, 21129 Hamburg (DE); Airbus S.A.S., 31707 Blagnac Cedex (FR)
(72) Inventor: TIRYAKI, Memis, 21129 Hamburg (DE); EILKEN, Wolfgang, 21129 Hamburg (DE); BRINDEAU, Jean-Mickael, 31700 Blagnac (DE)
(74) Representative: Isarpatent

(57) **Abstract**

A fastening arrangement (10) for attaching a floor (1) to a support structure (2) of a vehicle, in particular an aircraft (100), comprises an integrated floor module (3) including a cross beam (4) and a floor (1) deposited on the cross beam (4); and attachment rods (5a, 5b, 5c, 5d), wherein the cross beam (4) is fastened to the support structure (2) at each end via at least one of the attachment rods (5a, 5b, 5c, 5d).

## Description

The present invention pertains to a fastening arrangement for attaching a floor to a support structure of a vehicle. The present invention further pertains to an aircraft comprising such a fastening arrangement.

Although generally applicable to any kind of vehicle, in particular landborne, airborne or waterborne vehicles, the present invention and the problem on which it is based will be explained in greater detail with reference to passenger aircraft.

The fuselage shell of typical passenger aircraft consists of a rigid framework of stiffening elements that is covered by a skin. The framework comprises a series of frames bent into a circumferential direction according to the shape of the fuselage cross section and a plurality of longitudinal stringers that are joined to the frames. Inside the fuselage, a plurality of cross beams may be arranged one after the other in the longitudinal direction of the aircraft, each cross beam extending in a cross direction. The cross beams may further be supported by vertical struts, see for example document EP 2 733 061 A1. All of these components are part of a so-called primary structure, which provides the elements for stiffing the overall structure of the aircraft. The components of the primary structure are usually fastened to each other by rivets or similar means in the course of a major component assembly of the aircraft.

After the assembly of these major components, the floor of a passenger cabin is usually mounted and equipped step by step on top of the cross beams. Such a process may include mounting seat rails on the cross beams and attaching a plurality of floor panels to the seat rails. Next, seats, galleys, monuments and further cabin components may be connected via these seat rails. Cables, conduits, etc. may be provided as well within the floor. The overall installation of an aircraft floor is thus an intricate and time consuming process.

It would be beneficial if the assembly of the floor could be realized independently of the major component assembly. In order to speed up the assembly line, it would be particularly convenient if the floor could be fully equipped outside of the vehicle in order to safe lead time.

Against this background, it is an object of the present invention to find efficient solutions for integrating a fully equipped floor in a vehicle.

This object is achieved by a fastening arrangement having the features of claim 1 and an aircraft having the features of claim 13.

According to a first aspect of the invention, a fastening arrangement for attaching a floor to a support structure of an aircraft comprises an integrated floor module including a cross beam and a floor deposited on the cross beam; and attachment rods, wherein the cross beam is fastened to the support structure at each end via at least one of the attachment rods.

According to a second aspect of the invention, an aircraft comprises a fastening arrangement according to the first aspect of the invention.

One idea of the present invention is to provide a fully equipped floor module that is furnished with all relevant components outside of the vehicle and attached subsequently to the (preassembled) structure of the vehicle in one single assembly step. An integrated floor module according to the invention comprises one (or several) cross beams, on top of which a (preassembled) floor is arranged. The floor may be a fully equipped floor including floor panels, seat rails and so on. The floor may even already include seats, galleys, monuments, cables, conduits and so on. The integrated floor module may be assembled outside of the vehicle and may be mounted in its entirety to the vehicle in one single subsequent assembly step. To this end, the present invention provides attachment rods that fasten the cross beam of the integrated floor module to a support structure of the vehicle. Such a support structure may be, for example, a rib or frame or the like.

The solution according to the invention may be used to significantly improve the efficiency of the floor installation process in a vehicle, e.g. an aircraft. The complete floor of an aircraft may be assembled outside of the aircraft and then moved as a whole into the aircraft thereby saving lead time and thus costs.

Advantageous embodiments and improvements of the present invention are found in the subordinate claims.

According to an embodiment of the invention, the cross beam may be fastened to the support structure at each end via at least two attachment rods. One of the at least two attachment rods may be an upper attachment rod. One of the at least two attachment rods may be a lower attachment rod. In one example, a cross beam may be fastened to the support structure by four attachment rods overall, two attachment rods per end, one lower attachment rod per end and one upper attachment rod per end. However, in another example, a larger number of attachment rods may be provided, e.g. four per side (two upper and two lower ones), thus eight overall.

According to an embodiment of the invention, each attachment rod may be oriented horizontally or inclined with respect to the cross beam. The person of skill will be able to arrange the attachment rods in an optimal way for the purpose at hand, e.g. to optimize the local load distribution and/or to provide optimal load paths through the attachment rods.

According to an embodiment of the invention, the integrated floor module may be carried by the attachment rods. Thus, the attachment may be configured to hold the integrated floor module, that is to carry the weight of the integrated floor module. However, in other embodiments, the attachment rods may be supplemented by further holding structures, like, for example, struts, rods or similar.

According to an embodiment of the invention, the attachment rods may be configured to be adjustable in length. In this particularly advantageous embodiment, tolerances may be compensated by adjusting the attachment rods correspondingly. To this end, the attachment rods may be provided with automatic and/or electrically driven adjusting means, like actuators, stepper drives or similar. One or several actuators may be, for example, configured to adjust the length of each attachment rod. In a particular example, "smart actuators" may be provided that comprise load or force sensing units that are able to determine the local load or force distribution at the attachment rod. Such actuators may be controlled by a central processing unit such as a microcontroller that is able to gather all load and force measurement data of the actuators, determine a desired/balanced load distribution and to control individual ones of the actuators to selectively adjust the length of the individual attachment rods, respectively. Upon doing so, local force or load spikes may be balanced out dynamically leading to greater stability and less stress on the fastening arrangement. Alternatively or additionally, mechanical adjusting means may be provided at the attachment rods that may be adjusted by hand. However, the person of skill will be readily aware that other suitable means may be provided that allow to adjust or adapt the length of the attachment rods in a convenient way, e.g. pneumatic or hydraulic actuators and so on.

According to an embodiment of the invention, each attachment rod may comprise two shanks and a bracket connecting the shanks such that the shanks can be moved in or out of the bracket to adjust the attachment rod in length.

According to an embodiment of the invention, the shanks may be configured with a thread for continuous length adjustment or with a toothed rack for incremental length adjustment. In this embodiment, the attachment rod may be configured to be adjusted in length manually, e.g. by hand. Alternatively or additionally, automated means may be provided that allow to adjust the attachment rods remotely or automatically, e.g. by electric, pneumatic, hydraulic or similar actuators provided for this purpose.

According to an embodiment of the invention, at least some of the attachment rods may comprise an actuator configured to adjust the respective attachment rod in length. The actuator may be attached to or integrated in the attachment rod. For example, the actuator may be configured to move shanks in or out of a bracket or sheath or similar connecting the shanks. To this end, the shanks may be provided with a thread or similar such that the actuator may rotate the shanks to adjust an overall length of the respective attachment rod.

According to an embodiment of the invention, the fastening arrangement may further comprise support struts fastening the cross beam to the support structure from below the cross beam. In one particular example, the cross beam may be supported by two support struts. The support struts may attached to the cross beam at any position along the lower side of the cross beam, e.g. at or close to the ends of the cross beam.

According to an embodiment of the invention, at least one of the attachment rods and support struts may be rotary connected to at least one of the support structure and the cross beam. Due to this provision, tolerances may be further compensated by adjusting the (individual) orientations of the attachment rods in addition to their lengths.

According to an embodiment of the invention, at least one of the attachment rods and the support struts may comprise a fork bolt or a lug bolt at least at one end engaging a corresponding lug bolt or fork bolt of at least one of the support structure and the cross beam. Thus, the attachment rods may not only be configured to be adjustable in length and orientation. Furthermore, the attachment rods may be mounted to the cross beam and/or the support structure in a clean way, that is without any riveting, drilling or similar means, which potentially could weaken the overall integrity of the primary structure and/or of the fastening arrangement.

According to an embodiment of the invention, the integrated floor module may include a plurality of cross beams. Each cross beam may be fastened to the support structure via the attachment rods. Thus, a complete floor assembly may be provided as an integrated floor module including the underlying supporting cross beam structure.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. In the figures, like reference numerals denote like or functionally like components, unless indicated otherwise.
Fig. 1 schematically depicts a sectional view of a fastening assembly mounted in an aircraft according to an embodiment of the invention.
Fig. 2a is a cross-sectional view of an attachment rod employed in the fastening assembly of Fig. 1.
Fig. 2b is a top view of the attachment rod of Fig. 2a.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

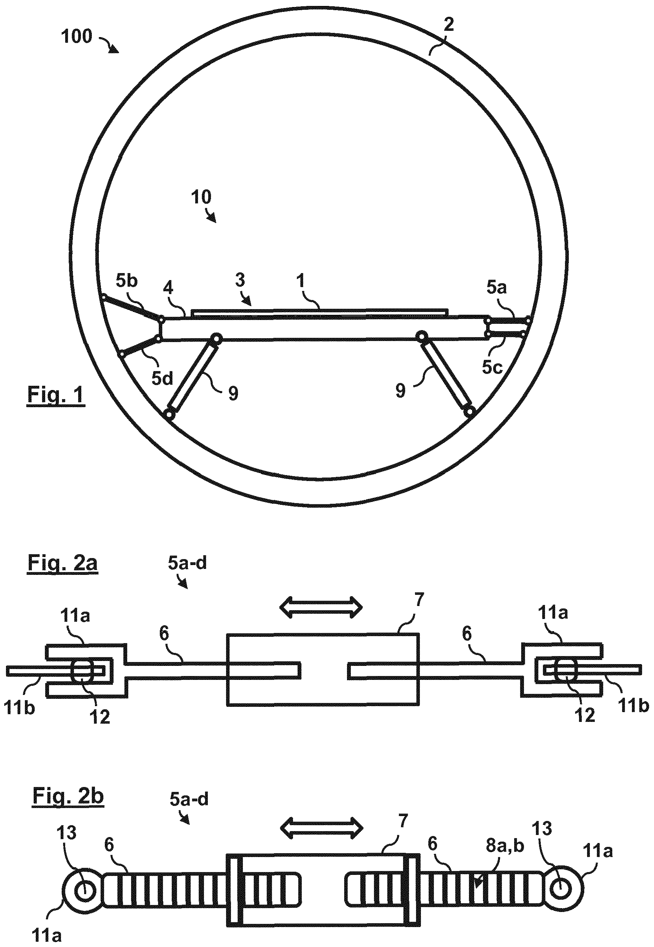

Figure 1 schematically depicts a sectional view of a fastening assembly 10 mounted in an aircraft 100 according to an embodiment of the invention. Fig. 2a is a sectional view of an attachment rod 5a-d employed in the fastening assembly 10 of Fig. 1, while Fig. 2b is a top view of the attachment rod 5a-d of Fig. 2a.

The aircraft 100 depicted in Fig. 1 may be a passenger plane, for example. The fastening arrangement 10 is used for attaching a floor 1 of the aircraft 100 to a support structure 2. In this particular example, the support structure 2 is a rib or a frame of the aircraft 100. The fastening arrangement 10 comprises an integrated floor module 3. The integrated floor module 3 includes a plurality of cross beams 4 that are arranged one after the other in a longitudinal direction of the aircraft 100, each cross beam 4 extending in a cross direction. Fig. 1 shows only one of these cross beams 4 as an example. The integrated floor module 3 further includes a floor 1 deposited on the cross beam 4. The floor 1 may be a fully equipped aircraft floor including fastening rails, in particular seat rails, floor panels, e.g. sandwich panels, as well as a fully furnished electrical infrastructure including cables and so on. Moreover, various passenger cabin components may be preinstalled on the floor 1. The floor 1 may be fastened to the cross beam 4 in various known ways, for example by means of seat rails that are additionally used to mechanically decouple the cabin components from the cross beam 4 and thus from the primary structure.

The fastening arrangement 10 further comprises at least four attachment rods 5a, 5b, 5c, 5d per cross beam, at least two upper attachment rods 5a, 5b and at least two lower attachment rods 5c, 5d. However, the person of skill will be aware that the specific number of attachment rods 5a, 5b, 5c, 5d in the embodiment of Fig. 1 is chosen merely as an example. Various other embodiments will be immediately clear to the person of skill based on different numbers of attachments rods 5a, 5b, 5c, 5d per cross beam. The cross beam 4 is fastened to the support structure 2 at each end via the attachment rods 5a, 5b, 5c, 5d. The right-hand side attachments rods 5a, 5c are oriented horizontally with respect to the cross beam 4 while the left-hand side attachments rods 5b, 5d are inclined with respect to the cross beam 4. These orientations of the attachments rods are chosen purely as an example to demonstrate that various different configurations are possible in order to provide an optimally balanced fastening arrangement 10 that compensates for possible tolerances of the structural components.

In addition, the fastening arrangement 10 of Fig. 1 comprises two support struts 9 per cross beam 4 that aid the attachment rods 5a, 5b, 5c, 5d in holding the integrated floor module 3 such that the attachment rods 5a, 5b, 5c, 5d do not have to carry the whole weight of the integrated floor module 3. However, in other embodiments, the integrated floor module 3 may be carried purely by means of the attachment rods 5a, 5b, 5c, 5d without any support struts 9 whatsoever.

The attachment rods 5a, 5b, 5c, 5d as well as the support struts 9 are rotary connected to the support structure 2 and the cross beam 4. The attachment rods 5a, 5b, 5c, 5d are further configured adjustable in length, as is explained with reference to Figs. 2a-b further below.

Each attachment rod 5a, 5b, 5c, 5d comprises two shanks 6 and a bracket 7 connecting the shanks 6 such that the shanks 6 can be moved in or out of the bracket 7 to adjust the attachment rod 5a, 5b, 5c, 5d in length. The shanks 6 may be configured with a thread 8a or similar for continuous length adjustment or, alternatively, with a toothed rack 8b or similar for incremental length adjustment. The bracket 7 may be provided with an actuator, stepper drive or similar (not shown) that is configured to move the shanks 6 in or out of the bracket 7 in order to adjust the length of the attachment rod 5a, 5b, 5c, 5d. For example, in case the shanks 6 are configured with a thread 8a, the bracket 7 may feature a thread complementary formed to the threads of the shanks 6 such that the actuator may rotate the shanks 6 and thereby move them in or out of the bracket 7. Such an actuator may be further provided with load or force sensing units that are able to determine the local load or force distribution at the attachment rod 5a, 5b, 5c, 5d. The actuator may be controlled by a central processing unit that is able to gather all load and force measurement data of the actuators, determine a desired/balanced load distribution and to control individual ones of the actuators to selectively adjust the length of the individual attachment rods 5a, 5b, 5c, 5d. Alternatively or additionally, the attachment rod 5a, 5b, 5c, 5d may be configured to be adjusted in length manually. In one example, the attachment rod 5a, 5b, 5c, 5d may be configured with toothed shanks 6, wherein the teeth may engage with a pawl or similar provided in the bracket 7 so that a ratchet is formed that may be locked and/or unlocked by pressing a tab or by operating a locking member or similar provided at the bracket 7.

Each attachment rod 5a, 5b, 5c, 5d comprises two fork bolts 11a engaging corresponding lug bolts 11b of the support structure 2 and the cross beam 4. Each fork-lug connection is fastened via fastening bolts 12 inserted through openings 13 in the fork bolts 11a and lug bolts 11b. Thus, a rotary connection is provided between the attachment rods 5a, 5b, 5c, 5d on the one hand and the support structure 2 respectively the cross beam 4 on the other hand. The support struts 9 are fixed to the support structure 2 and the cross beam 4 with similar fork-lug-bolt connections.

This particular configuration of the connection between the integrated floor module 3 and the support structure 2 via the attachment rods 5a, 5b, 5c, 5d and the support struts 9 offers a very flexible attachment of a floor 1 to a primary structure of an aircraft 100. On the one hand, drilling and/or riveting or similar can be completely avoided or at least heavily reduced. On the other, tolerances can be compensated efficiently via the adjustable attachment rods 5a, 5b, 5c, 5d. As a result, a very elegant solution is provided to integrate a (fully equipped) floor 1 in an aircraft 100. The integrated floor module 3 may be assembled separately from the primary structure of the aircraft 100 and only moved into the fuselage afterwards. The attachment rods 5a, 5b, 5c, 5d and support struts 9 may then be used to fasten the integrated floor module 3 to the frames of the aircraft 100 in an optimal way to achieve an ideal and/or desired and/or balanced local and/or global load distribution. Tolerances can be easily compensated by adjusting the length and/or orientation of the attachment rods 5a, 5b, 5c, 5d and the support struts 9. This modular integration of an aircraft floor 1 safes costs and time and thus provides an efficient solution for integrating a floor 1 into an aircraft 100.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated. Many other examples will be apparent to one skilled in the art upon reviewing the above specification.

### List of reference signs

- 1: floor
- 2: support structure
- 3: integrated floor module
- 4: cross beam
- 5a-d: attachment rod
- 6: shank
- 7: bracket
- 8a: thread
- 8b: toothed rack
- 9: support strut
- 10: fastening arrangement
- 11a: fork bolt
- 11b: lug bolt
- 12: fastening bolt
- 13: opening
- 100: aircraft

## Claims

1. Fastening arrangement (10) for attaching a floor (1) to a support structure (2) of a vehicle, in particular an aircraft (100), comprising:
an integrated floor module (3) including a cross beam (4) and a floor (1) deposited on the cross beam (4); and
attachment rods (5a, 5b, 5c, 5d), wherein the cross beam (4) is fastened to the support structure (2) at each end via at least one of the attachment rods (5a, 5b, 5c, 5d).

2. Fastening arrangement (10) according to claim 1, wherein the cross beam (4) is fastened to the support structure (2) at each end via at least two attachment rods (5a, 5b, 5c, 5d), one of them being an upper attachment rod (5a, 5b) and one of them being a lower attachment rod (5c, 5d).

3. Fastening arrangement (10) according to claim 1 or 2, wherein each attachment rod (5a, 5b, 5c, 5d) is oriented horizontally or inclined with respect to the cross beam (4).

4. Fastening arrangement (10) according to one of the claims 1 to 3, wherein the integrated floor module (3) is carried by the attachment rods (5a, 5b, 5c, 5d).

5. Fastening arrangement (10) according to one of the claims 1 to 4, wherein the attachment rods (5a, 5b, 5c, 5d) are configured length adjustable.

6. Fastening arrangement (10) according to claim 5, wherein each attachment rod (5a, 5b, 5c, 5d) comprises two shanks (6) and a bracket (7) connecting the shanks (6) such that the shanks (6) can be moved in or out of the bracket (7) to adjust the attachment rod (5a, 5b, 5c, 5d) in length.

7. Fastening arrangement (10) according to claim 6, wherein the shanks (6) are configured with a thread (8a) for continuous length adjustment or with a toothed rack (8b) for incremental length adjustment.

8. Fastening arrangement (10) according to one of the claims 5 to 7, wherein at least some of the attachment rods (5a, 5b, 5c, 5d) comprise an actuator configured to adjust the respective attachment rod (5a, 5b, 5c, 5d) in length.

9. Fastening arrangement (10) according to one of the claims 1 to 8, further comprising support struts (9) fastening the cross beam (4) to the support structure (2) from below the cross beam (4).

10. Fastening arrangement (10) according to one of the claims 1 to 9, wherein at least one of the attachment rods (5a, 5b, 5c, 5d) and support struts (9) are rotary connected to at least one of the support structure (2) and the cross beam (4).

11. Fastening arrangement (10) according to claim 10, wherein at least one of the attachment rods (5a, 5b, 5c, 5d) and the support struts (9) comprise a fork bolt (11a) or a lug bolt (11b) at least at one end engaging a corresponding lug bolt (11b) or fork bolt (11a) of at least one of the support structure (2) and the cross beam (4).

12. Fastening arrangement (10) according to one of the claims 1 to 11, wherein the integrated floor module (3) includes a plurality of cross beams (4), each cross beam (4) being fastened to the support structure (2) via the attachment rods (5a, 5b, 5c, 5d).

13. Aircraft (100) comprising a fastening arrangement (10) according to one of the claims 1 to 12.
